# EUROPÄISCHE PATENTANMELDUNG

(11) **EP 4 795 916 A1**
(43) Veröffentlichungstag der Anmeldung: **26.08.2026**
(21) Anmeldenummer: 26160094.4
(22) Anmeldetag: 23.02.2026
(51) Int. Cl.: A01D 34/43, A01D 34/44

(54) **SPINDELMÄHERANBAUGERÄT**

(30) Priorität: 25.02.2025 DE 102025107147
(71) Anmelder: Wesseler, Guido, 48691 Vreden (DE)
(72) Erfinder: Wesseler, Guido, 48691 Vreden (DE)
(74) Vertreter: Schatz, Markus Franz-Josef

(57) **Zusammenfassung**

Die Erfindung betrifft ein Spindelmäheranbaugerät (1) für einen Traktor, aufweisend wenigstens eine Spindelmähereinheit (15) mit wenigstens einer Mähspindel (16) mit Schneidelementen (17). Um ein Spindelmäheranbaugerät (1) mit geringeren Betriebs- und Wartungskosten bereitzustellen, weist die Mähspindel (16) wenigstens zwei axial in einer Reihe angeordnete Mähspindeluntereinheiten (33) auf, die jeweils umfangsversetzt zueinander angeordnete Schneidelemente (17) aufweisen.

## Beschreibung

### Technisches Gebiet

Die Erfindung betrifft ein Spindelmäheranbaugerät für einen Traktor, aufweisend wenigstens eine Spindelmähereinheit mit wenigstens einer Mähspindel mit Schneidelementen.

### Stand der Technik

Zum Mähen eines bewachsenen Untergrunds werden unterschiedliche Mähgeräte eingesetzt, die wahlweise als Anbaugeräte an einem Traktor angeordnet werden können. Ein Beispiel für ein solches Anbaugerät ist ein Mähspindelanbaugerät, das eine Mähspindel mit umfangsversetzt zueinander angeordneten Schneidmessern aufweist, die mit einem feststehenden Schneidmesser des Mähspindelanbaugeräts zusammenwirken.

Eine weitere Bauart von solchen Mäheranbaugeräten sind Schlegelmäheranbaugeräte. Um mit diesen Anbaugeräten ein optimales Schneidergebnis zu erzielen, weisen diese Anbaugeräte eine Einrichtung zum Erzeugen einer vom Untergrund weg gerichteten Luftströmung auf, die dazu genutzt wird, die zu mähende Bepflanzung unmittelbar vor dem Schnitt aufzurichten. Nachteilig bei diesen Anbaugeräten ist, dass auf dem zu mähenden Untergrund lebende Tiere, insbesondere Insekten, vom Untergrund abgesaugt werden, was aus Umweltschutzgründen nicht gewünscht oder gar verboten ist.

### Offenbarung der Erfindung

Eine Aufgabe der Erfindung ist es, ein Spindelmäheranbaugerät mit geringeren Betriebs- und Wartungskosten bereitzustellen.

Diese Aufgabe wird durch den unabhängigen Patentanspruch gelöst. Vorteilhafte Ausgestaltungen sind in den abhängigen Patentansprüchen, der nachfolgenden Beschreibung und den Figuren wiedergegeben, wobei diese Ausgestaltungen jeweils für sich genommen oder Kombination von wenigstens zwei dieser Ausgestaltungen miteinander einen vorteilhaften und/oder weiterbildenden Aspekt der Erfindung darstellen können.

Ein erfindungsgemäßes Spindelmäheranbaugerät für einen Traktor weist wenigstens eine Spindelmähereinheit mit wenigstens einer Mähspindel mit Schneidelementen auf, wobei die Mähspindel wenigstens zwei axial in einer Reihe angeordnete Mähspindeluntereinheiten aufweist, die jeweils umfangsversetzt zueinander angeordnete Schneidelemente aufweisen.

Erfindungsgemäß verlaufen die Schneidelemente also nicht wie herkömmlich über die gesamte axiale Länge der Mähspindel, sondern lediglich über einen Teil der axialen Lände der Mähspindel. Hierdurch muss bei einem Schaden an einem Schneidelement lediglich das im Vergleich zu herkömmlichen Schneidelementen relativ kurz ausgebildete Schneidelement ausgewechselt werden. Dies geht mit einem geringeren Materialverbrauch und somit mit geringeren Betriebs- und Wartungskosten einher. Die Mähspindel kann auch drei oder mehr solcher Mähspindeluntereinheiten aufweisen.

Mit dem erfindungsgemäßen Spindelmäheranbaugerät erfolgt ein Mähvorgang mittels wenigstens einer Spindelmähereinheit, die wenigstens eine Mähspindel mit Schneidelementen aufweist. Im Gegensatz zu einer Verwendung eines eingangs beschriebenen Schlegelmäheranbaugeräts ist es bei einem Spindelmäheranbaugerät wegen einer anders ausgebildeten Schneidemechanik nicht erforderlich, die zu mähende Bepflanzung unmittelbar vor dem Schnitt mittels einer vom Untergrund weg gerichteten Luftströmung aufzurichten. Daher kann bei der Erfindung auf die Erzeugung einer solchen Luftströmung verzichtet werden, die eingangs beschriebenen Nachteil hätte. Folglich ermöglicht schon aufgrund dieses baulichen Unterschieds die Erfindung ein umweltschonendes Mähen eines bewachsenen Untergrunds.

Die Schneidelemente der Mähspindel können schraubenlinienförmig in axialer Richtung der Mähspindel verlaufen. Die Schneidelemente können beispielsweise als Schneidmesser ausgebildet sein. Das Spindelmähanbaugerät kann wenigstens eine, beispielsweise hydraulisch oder elektromechanisch, Antriebseinheit zum Antreiben der Mähspindel aufweisen.

Das erfindungsgemäße Spindelmäheranbaugerät kann frontseitig oder heckseitig an einen Traktor oder an einem Ausleger eines Traktors angeordnet werden. Die Verwendung des Spindelmäheranbaugeräts soll aber nicht auf Traktoren eingeschränkt sein. Stattdessen kann das Spindelmäheranbaugerät auch an einem anderweitig ausgebildeten Nutzfahrzeug angeordnet und zum Mähen verwendet werden.

Gemäß einer vorteilhaften Ausgestaltung weist jede Mähspindeluntereinheit an jedem axialen Endabschnitt jeweils wenigstens einen zumindest teilweise umlaufend ausgebildeten und radial nach außen ragenden Befestigungsflansch auf, an denen die Schneidelemente der jeweiligen Mähspindeluntereinheit befestigt sind, wobei axial unmittelbar benachbart zueinander angeordnete Mähspindeluntereinheiten an ihren einander zugewandt angeordneten axialen Endabschnitten einen gemeinsamen Befestigungsflansch aufweisen und Schneidelemente der axial unmittelbar benachbart zueinander angeordnete Mähspindeluntereinheiten umfangsversetzt zueinander angeordnet sind. Das jeweilig an den jeweiligen Befestigungsflanschen befestigte Schneidelement ist radial beabstandet zu einer Achse der Mähspindel angeordnet. Eine Anzahl von Befestigungsflanschen ist immer um die Zahl Eins größer als die Anzahl von Mähspindeluntereinheiten. Das jeweilige Schneidelement kann beispielsweise mittels jeweils eines Befestigungselements an dem jeweiligen Befestigungsflansch befestigt werden. Das jeweilige Befestigungselement kann beispielsweise über wenigstens ein mechanisches Verbindungsmittel, beispielsweise eine Schraubverbindung oder eine Nietverbindung, an dem jeweiligen Befestigungsflansch befestigt sein.

Gemäß einer weiteren vorteilhaften Ausgestaltung weist jeder Befestigungsflansch eine zumindest teilweise umlaufend angeordnete Lochreihe mit axial verlaufenden Befestigungslöchern auf, über die das jeweilige Schneidelement umlaufend in verschiedenen Positionen an dem jeweiligen Befestigungsflansch befestigbar ist. Sind der jeweilige Befestigungsflansch und die daran angeordnete Lochreihe vollständig umlaufend angeordnet, kann es beispielsweise auch möglich sein, die Mähspindel je nach Wunsch zu konfigurieren, indem die Anzahl von Schneidelementen der jeweiligen Mähspindeluntereinheit auf einfache Weise an die jeweiligen Anforderungen angepasst werden kann. Dabei kann das jeweilige Befestigungsloch dazu genutzt werden, ein Verbindungsmittel, über das der jeweilige Befestigungsflansch mit dem jeweiligen das jeweilige Schneidelement haltenden Befestigungselement verbunden werden kann, durch das Befestigungsloch hindurchzuführen. Je mehr Befestigungslöcher die Lochreihe aufweist, desto feiner kann die Anpassung der Mähspindeluntereinheit an die jeweiligen Anforderungen erfolgen. Die Befestigungslöcher können beispielsweise gleichmäßig umfangsversetzt zueinander angeordnet sein. Der jeweilige Befestigungsflansch kann entweder kreisförmig oder elliptisch oder rautenförmig ausgebildet sein. Bei einem elliptisch oder rautenförmig ausgebildeten Befestigungsflansch kann an jedem der beiden äußeren Flanschabschnitte, die bezüglich einer Hauptachse des Befestigungsflansch diametral einander gegenüberliegend angeordnet sind, eine Lochreihe teilweise umlaufend angeordnet sein. Bei einem kreisförmig ausgebildeten Befestigungsflansch kann die Lochreihe teilweise oder vollständig umlaufend angeordnet sein.

Gemäß einer weiteren vorteilhaften Ausgestaltung ist wenigstens ein Schneidelement als Vierkantstab ausgebildet oder es weist eine als rechtwinkliges Trapez ausgebildete Querschnittsfläche auf. Hierdurch ist das Schneidelement im Vergleich zu einem herkömmlichen Schneidmesser sehr robust und dauerhaft ausgebildet. Das jeweilige als Vierkantstab ausgebildete Schneidelement kann massiv ausgebildet sein und eine rechteckige, insbesondere quadratische, Querschnittsfläche aufweisen. Das jeweilige Schneidelement mit einer Querschnittsfläche in Form eines rechtwinkligen Trapezes kann eine Schneidkante an einem spitzen Winkel der Querschnittsfläche aufweisen.

Gemäß einer weiteren vorteilhaften Ausgestaltung weist das Spindelmäheranbaugerät wenigstens eine Absaugeinheit zum Absaugen von durch die Spindelmähereinheit erzeugtem Schnittgut auf. An die Absaugeinheit kann beispielsweise ein Absaugschlauch einer Absauganlage des Traktors angeschlossen werden, wobei die Absauganlage wenigstens ein Absauggebläse aufweisen kann. Die zum Absaugen von durch die Spindelmähereinheit erzeugtem Schnittgut zu erzeugende Luftströmung ist deutlich geringer als eine Luftströmung zum Aufrichten einer zu mähende Bepflanzung unmittelbar vor dem Schnitt. Zudem wird ein Schnittraum der Spindelmähereinheit durch das in die Absaugeinheit gesaugte Schnittgut gewissermaßen von der zum Absaugen von durch die Spindelmähereinheit erzeugtem Schnittgut gegebenen Luftströmung getrennt. Dadurch kann zuverlässig vermieden werden, dass Tiere vom zu mähenden Untergrund abgesaugt werden. Trotz des Vorhandenseins der Schnittgutabsaugung wird mit dem Spindelmäheranbaugerät somit ein umweltschonendes Mähen eine bewachsenen Untergrunds ermöglicht. Im Vergleich zur Erzeugung einer Luftströmung zum Aufrichten einer zu mähende Bepflanzung unmittelbar vor dem Schnitt ist die Erzeugung einer Luftströmung zum Absaugen von mit der Spindelmähereinheit erzeugtem Schnittgut zudem deutlich weniger energieintensiv, da ein Absauggebläse deutlich geringer ausgelegt und unter geringerem Energieverbrauch betrieben werden kann. Darüber hinaus ist der Betrieb des Spindelmäheranbaugeräts bedingt durch den deutlich einfacheren und unter geringeren Kräften durchführbaren Schneidvorgang deutlich energiesparsamer als der Betrieb eines herkömmlichen Schlegelmähers.

Gemäß einer weiteren vorteilhaften Ausgestaltung weist die Absaugeinheit eine sich über zumindest einen größten Teil einer axialen Länge der Mähspindel erstreckende, auf ihrer der Mähspindel zugewandten Seite zumindest bereichsweise offen ausgebildete Absaugkammer auf, an der wenigstens ein Absauganschluss angeordnet ist, an dem ein Absaugschlauch anschließbar ist. Hierdurch kann das von der Spindelmähereinheit erzeugte Schnittgut sehr gleichmäßig bzw. vorzugsweise über die gesamte axiale Länge der Mähspindel abgesaugt werden, was die Schnittgutabsaugung verbessert, in dem das Liegenbleiben von Schnittgut auf dem Untergrund weitestgehend vermieden wird. Die Absaugkammer kann beispielsweise ein langgestreckt gebildetes Gehäuse aufweisen, dessen Längsachse parallel zur Längsmittelachse der Mähspindel angeordnet sein kann. Die der Mähspindel zugewandte Seite der Absaugkammer kann beispielsweise wenigstens eine langestreckt ausgebildete und parallel zur Längsmittelachse der Mähspindel verlaufende Absaugöffnung aufweisen. Alternativ kann die der Mähspindel zugewandte Seite der Absaugkammer beispielsweise zwei oder mehr in einer Reihe und beabstandet voneinander angeordnete Absaugöffnungen aufweisen. Der Ansauganschluss kann beispielsweise einen nach außen vorstehenden Anschlussstutzen aufweisen. Der Anschlussstutzen kann beispielsweise geneigt nach ober verlaufend angeordnet sein.

Gemäß einer weiteren vorteilhaften Ausgestaltung ist in der Absaugkammer wenigstens eine angetriebene Förderschnecke zumindest teilweise angeordnet, mit der ein in der Absaugkammer befindliches Schnittgut in Richtung des Absauganschlusses förderbar ist. Hierdurch kann das in der Absaugkammer befindliche Schnittgut sehr gleichmäßig aus der Absaugkammer entfernt werden, was insbesondere bei einer länger ausgebildeten Absaugkammer von Vorteil ist. Zudem muss durch das Vorhandensein der Förderschnecke die Absaugung des Schnittguts aus der Absaugkammer nicht über die gesamte Länge der Absaugkammer erfolgen, was den Energieverbrauch weiter erhöhen würde. Die Förderschnecke kann beispielsweise zwei gegenläufig ausgebildete, axial beabstandet voneinander angeordnete Schneckengewinde aufweisen, so dass das Schnittgut bei Drehung der Förderschnecke mit den Schneckengewinden aufeinander zu bewegt wird, vorzugsweise bis zu einem Bereich der Absaugkammer, an der der Absauganschluss angeordnet ist. Zum Antreiben der Förderschnecke kann außen an einer axialen Endwand der Absaugkammer wenigstens ein Antrieb, beispielsweise ein Hydraulikmotor, angeordnet sein.

Gemäß einer weiteren vorteilhaften Ausgestaltung weist das Spindelmäheranbaugerät wenigstens eine ansteuerbare Bewegungseinrichtung auf, die eingerichtet ist, die Mähspindel von einer unteren Mähstellung in eine obere Ausweichstellung zu bewegen, und umgekehrt. Hierdurch kann die Spindelmähereinheit bzw. die Mähspindel bei Bedarf mittels der Bewegungseinrichtung in die obere Ausweichstellung angehoben werden, beispielsweise um beim Überfahren von Steinen oder dergleichen einen Kontakt und einen damit einhergehenden Schaden an der Mähspindel zuverlässig vermeiden zu können. Die Bewegungseinrichtung kann hierzu wenigstens einen, insbesondere elektrisch, ansteuerbaren Aktor aufweisen.

Gemäß einer weiteren vorteilhaften Ausgestaltung ist die Mähspindel über wenigstens einen in einer Ebene schwenkbar an einem Grundgestell des Spindelmäheranbaugeräts angeordneten Schwenkarm schwenkbar angeordnet, wobei die Bewegungseinrichtung einerseits an dem Grundgestell und andererseits an dem Schwenkarm angreift. Hierdurch führt die Mähspindel bei ihrer Bewegung von der unteren Mähstellung in die obere Ausweichstellung, und umgekehrt, eine Schwenkbewegung durch. Dabei kann der Schwenkarm beispielsweise um eine Schwenkachse schwenkbar angeordnet sein, die parallel zu der Längsmittelachse der Mähspindel ausgerichtet sein kann. Die Mähspindel kann beispielsweise um ihre Längsmittelachse drehbar an dem Schwenkarm angeordnet sein, wozu wenigstens ein Drehlager vorhanden sein kann. Die Mähspindel kann beispielsweise jeweils endseitig über einen eigenen Schwenkarm schwenkbar angeordnet sein, also zumindest teilweise zwischen den beiden Schwenkarmen angeordnet sein. Die beiden Schwenkarme können beispielsweise über wenigstens ein Bauteil starr miteinander verbunden sein. Das Bauteil kann beispielsweise gleichzeitig als Abdeckung dienen, mit der die Mähspindel auf ihrer der Absaugeinheit abgewandten Seite abgedeckt wird.

Gemäß einer weiteren vorteilhaften Ausgestaltung weist die Bewegungseinrichtung wenigstens einen ansteuerbaren Hydraulik- oder Pneumatikzylinder auf. Der Hydraulik- oder Pneumatikzylinder kann beispielsweise an ein Hydrauliksystem des Traktors angeschlossen werden, um den Hydraulik- oder Pneumatikzylinder betätigen zu können.

Der Hydraulik- oder Pneumatikzylinder kann beispielsweise einerseits an dem Grundgestell des Spindelmäheranbaugeräts und andererseits an dem wenigstens einen Schwenkarm angreifen. Wenn zwei Schwenkarme vorhanden sind, kann die Bewegungseinrichtung auch für jeden Schwenkarm einen eigenen Hydraulik- oder Pneumatikzylinder aufweisen. Alternativ kann die Bewegungseinrichtung statt des Hydraulik- oder Pneumatikzylinders wenigstens eine elektromechanische Stelleinrichtung aufweisen.

Ein zweiter Gegenstand der Erfindung betrifft eine Spindelmäheranbaugerät für einen Traktor, die wenigstens eine Spindelmähereinheit mit wenigstens einer Mähspindel mit Schneidelementen und wenigstens eine Absaugeinheit zum Absaugen von durch die Spindelmähereinheit erzeugtem Schnittgut aufweist.

Mit dem Spindelmäheranbaugerät gemäß dem zweiten Gegenstand der Erfindung erfolgt ein Mähvorgang mittels wenigstens einer Spindelmähereinheit, die wenigstens eine Mähspindel mit Schneidelementen aufweist. Im Gegensatz zu einer Verwendung eines eingangs beschriebenen Schlegelmäheranbaugeräts ist es bei einem Spindelmäheranbaugerät wegen einer anders ausgebildeten Schneidemechanik nicht erforderlich, die zu mähende Bepflanzung unmittelbar vor dem Schnitt mittels einer vom Untergrund weg gerichteten Luftströmung aufzurichten. Daher kann bei der Erfindung auf die Erzeugung einer solchen Luftströmung verzichtet werden, die eingangs beschriebenen Nachteil hätte. Folglich ermöglicht schon aufgrund dieses baulichen Unterschieds die Erfindung ein umweltschonendes Mähen eine bewachsenen Untergrunds. Daher ist es eine Aufgabe des zweiten Gegenstands der Erfindung, ein umweltschonendes Mähen eine bewachsenen Untergrunds zu ermöglichen.

Die Schneidelemente der Mähspindel können schraubenlinienförmig in axialer Richtung der Mähspindel verlaufen. Die Schneidelemente können beispielsweise als Schneidmesser ausgebildet sein. Das Spindelmähanbaugerät kann wenigstens eine, beispielsweise hydraulische oder elektromechanische, Antriebseinheit zum Antreiben der Mähspindel aufweisen.

An die Absaugeinheit kann beispielsweise ein Absaugschlauch einer Absauganlage des Traktors angeschlossen werden, wobei die Absauganlage wenigstens ein Absauggebläse aufweisen kann. Die zum Absaugen von durch die Spindelmähereinheit erzeugtem Schnittgut zu erzeugende Luftströmung ist deutlich geringer als eine Luftströmung zum Aufrichten einer zu mähende Bepflanzung unmittelbar vor dem Schnitt. Zudem wird ein Schnittraum der Spindelmähereinheit durch das in die Absaugeinheit gesaugte Schnittgut gewissermaßen von der zum Absaugen von durch die Spindelmähereinheit erzeugtem Schnittgut gegebenen Luftströmung getrennt. Dadurch kann zuverlässig vermieden werden, dass Tiere vom zu mähenden Untergrund abgesaugt werden. Trotz des Vorhandenseins der Schnittgutabsaugung gemäß dem zweiten Gegenstand der Erfindung wird mit dem Spindelmäheranbaugerät somit ein umweltschonendes Mähen eine bewachsenen Untergrunds ermöglicht. Im Vergleich zur Erzeugung einer Luftströmung zum Aufrichten einer zu mähende Bepflanzung unmittelbar vor dem Schnitt ist die Erzeugung einer Luftströmung zum Absaugen von mit der Spindelmähereinheit erzeugtem Schnittgut zudem deutlich weniger energieintensiv, da ein Absauggebläse deutlich geringer ausgelegt und unter geringerem Energieverbrauch betrieben werden kann. Darüber hinaus ist der Betrieb des Spindelmäheranbaugeräts bedingt durch den deutlich einfacheren und unter geringeren Kräften durchführbaren Schneidvorgang deutlich energiesparsamer als der Betrieb eines herkömmlichen Schlegelmähers.

Das Spindelmäheranbaugerät gemäß dem zweiten Gegenstand der Erfindung kann frontseitig oder heckseitig an einen Traktor oder an einem Ausleger eines Traktors angeordnet werden. Die Verwendung des Spindelmäheranbaugeräts soll aber nicht auf Traktoren eingeschränkt sein. Stattdessen kann das Spindelmäheranbaugerät auch an einem anderweitig ausgebildeten Nutzfahrzeug angeordnet und zum Mähen verwendet werden.

Gemäß einer vorteilhaften Ausgestaltung des zweiten Gegenstands der Erfindung weist die Absaugeinheit eine sich über zumindest einen größten Teil einer axialen Länge der Mähspindel erstreckende, auf ihrer der Mähspindel zugewandten Seite zumindest bereichsweise offen ausgebildete Absaugkammer auf, an der wenigstens ein Absauganschluss angeordnet ist, an dem ein Absaugschlauch anschließbar ist. Hierdurch kann das von der Spindelmähereinheit erzeugte Schnittgut sehr gleichmäßig bzw. vorzugsweise über die gesamte axiale Länge der Mähspindel abgesaugt werden, was die Schnittgutabsaugung verbessert, in dem das Liegenbleiben von Schnittgut auf dem Untergrund weitestgehend vermieden wird. Die Absaugkammer kann beispielsweise ein langgestreckt gebildetes Gehäuse aufweisen, dessen Längsachse parallel zur Längsmittelachse der Mähspindel angeordnet sein kann. Die der Mähspindel zugewandte Seite der Absaugkammer kann beispielsweise wenigstens eine langestreckt ausgebildete und parallel zur Längsmittelachse der Mähspindel verlaufende Absaugöffnung aufweisen. Alternativ kann die der Mähspindel zugewandte Seite der Absaugkammer beispielsweise zwei oder mehr in einer Reihe und beabstandet voneinander angeordnete Absaugöffnungen aufweisen. Der Ansauganschluss kann beispielsweise einen nach außen vorstehenden Anschlussstutzen aufweisen. Der Anschlussstutzen kann beispielsweise geneigt nach ober verlaufend angeordnet sein.

Gemäß einer weiteren vorteilhaften Ausgestaltung des zweiten Gegenstands der Erfindung ist in der Absaugkammer wenigstens eine angetriebene Förderschnecke zumindest teilweise angeordnet, mit der ein in der Absaugkammer befindliches Schnittgut in Richtung des Absauganschlusses förderbar ist. Hierdurch kann das in der Absaugkammer befindliche Schnittgut sehr gleichmäßig aus der Absaugkammer entfernt werden, was insbesondere bei einer länger ausgebildeten Absaugkammer von Vorteil ist. Zudem muss durch das Vorhandensein der Förderschnecke die Absaugung des Schnittguts aus der Absaugkammer nicht über die gesamte Länge der Absaugkammer erfolgen, was den Energieverbrauch weiter erhöhen würde. Die Förderschnecke kann beispielsweise zwei gegenläufig ausgebildete, axial beabstandet voneinander angeordnete Schneckengewinde aufweisen, so dass das Schnittgut bei Drehung der Förderschnecke mit den Schneckengewinden aufeinander zu bewegt wird, vorzugsweise bis zu einem Bereich der Absaugkammer, an der der Absauganschluss angeordnet ist. Zum Antreiben der Förderschnecke kann außen an einer axialen Endwand der Absaugkammer wenigstens ein Antrieb, beispielsweise ein Hydraulikmotor, angeordnet sein.

Gemäß einer weiteren vorteilhaften Ausgestaltung des zweiten Gegenstands der Erfindung weist das Spindelmäheranbaugerät wenigstens eine ansteuerbare Bewegungseinrichtung auf, die eingerichtet ist, die Mähspindel von einer unteren Mähstellung in eine obere Ausweichstellung zu bewegen, und umgekehrt. Hierdurch kann die Spindelmähereinheit bzw. die Mähspindel bei bedarf mittels der Bewegungseinrichtung in die obere Ausweichstellung angehoben werden, beispielsweise um beim Überfahren von Steinen oder dergleichen einen Kontakt und einen damit einhergehenden Schaden an der Mähspindel zuverlässig vermeiden zu können. Die Bewegungseinrichtung kann hierzu wenigstens einen, insbesondere hydraulisch oder elektromechanisch, ansteuerbaren Aktor aufweisen.

Gemäß einer weiteren vorteilhaften Ausgestaltung des zweiten Gegenstands der Erfindung ist die Mähspindel über wenigstens einen in einer Ebene schwenkbar an einem Grundgestell des Spindelmäheranbaugeräts angeordneten Schwenkarm schwenkbar angeordnet, wobei die Bewegungseinrichtung einerseits an dem Grundgestell und andererseits an dem Schwenkarm angreift. Hierdurch führt die Mähspindel bei ihrer Bewegung von der unteren Mähstellung in die obere Ausweichstellung, und umgekehrt, eine Schwenkbewegung durch. Dabei kann der Schwenkarm beispielsweise um eine Schwenkachse schwenkbar angeordnet sein, die parallel zu der Längsmittelachse der Mähspindel ausgerichtet sein kann. Die Mähspindel kann beispielsweise um ihre Längsmittelachse drehbar an dem Schwenkarm angeordnet sein, wozu wenigstens ein Drehlager vorhanden sein kann. Die Mähspindel kann beispielsweise jeweils endseitig über einen eigenen Schwenkarm schwenkbar angeordnet sein, also zumindest teilweise zwischen den beiden Schwenkarmen angeordnet sein. Die beiden Schwenkarme können beispielsweise über wenigstens ein Bauteil starr miteinander verbunden sein. Das Bauteil kann beispielsweise gleichzeitig als Abdeckung dienen, mit der die Mähspindel auf ihrer der Absaugeinheit abgewandten Seite abgedeckt wird.

Gemäß einer weiteren vorteilhaften Ausgestaltung des zweiten Gegenstands der Erfindung weist die Bewegungseinrichtung wenigstens einen ansteuerbaren Hydraulik- oder Pneumatikzylinder auf. Der Hydraulik- oder Pneumatikzylinder kann beispielsweise an ein Hydrauliksystem des Traktors angeschlossen werden, um den Hydraulik- oder Pneumatikzylinder betätigen zu können. Der Hydraulik- oder Pneumatikzylinder kann beispielsweise einerseits an dem Grundgestell des Spindelmäheranbaugeräts und andererseits an dem wenigstens einen Schwenkarm angreifen. Wenn zwei Schwenkarme vorhanden sind, kann die Bewegungseinrichtung auch für jeden Schwenkarm einen eigenen Hydraulik- oder Pneumatikzylinder aufweisen. Alternativ kann die Bewegungseinrichtung statt des Hydraulik- oder Pneumatikzylinders wenigstens eine elektromechanische Stelleinrichtung aufweisen.

Gemäß einer weiteren vorteilhaften Ausgestaltung des zweiten Gegenstands der Erfindung weist die Mähspindel wenigstens zwei axial in einer Reihe angeordnete Mähspindeluntereinheiten auf, die jeweils umfangsversetzt zueinander angeordnete Schneidelemente aufweisen. Hierbei verlaufen die Schneidelemente also nicht wie herkömmlich über die gesamte axiale Länge der Mähspindel, sondern lediglich über einen Teil der axialen Lände der Mähspindel. Hierdurch muss bei einem Schaden an einem Schneidelement lediglich das im Vergleich zu herkömmlichen Schneidelementen relativ kurz ausgebildete Schneidelement ausgewechselt werden. Dies geht mit einem geringeren Materialverbrauch und somit mit geringeren Betriebs- und Wartungskosten einher. Die Mähspindel kann auch drei oder mehr solcher Mähspindeluntereinheiten aufweisen.

Gemäß einer weiteren vorteilhaften Ausgestaltung des zweiten Gegenstands der Erfindung weist jede Mähspindeluntereinheit an jedem axialen Endabschnitt jeweils wenigstens einen zumindest umlaufend ausgebildeten und radial nach außen ragenden Befestigungsflansch auf, an denen die Schneidelemente der jeweiligen Mähspindeluntereinheit befestigt sind, wobei axial unmittelbar benachbart zueinander angeordnete Mähspindeluntereinheiten an ihren einander zugewandt angeordneten axialen Endabschnitten einen gemeinsamen Befestigungsflansch aufweisen und Schneidelemente der axial unmittelbar benachbart zueinander angeordnete Mähspindeluntereinheiten umfangsversetzt zueinander angeordnet sind. Das jeweilig an den jeweiligen Befestigungsflanschen befestigte Schneidelement ist radial beabstandet zu einer Achse der Mähspindel angeordnet. Eine Anzahl von Befestigungsflanschen ist immer um die Zahl Eins größer als die Anzahl von Mähspindeluntereinheiten. Das jeweilige Schneidelement kann beispielsweise mittels jeweils eines Befestigungselements an dem jeweiligen Befestigungsflansch befestigt werden. Das jeweilige Befestigungselement kann beispielsweise über wenigstens ein mechanisches Verbindungsmittel, beispielsweise eine Schraubverbindung oder eine Nietverbindung, an dem jeweiligen Befestigungsflansch befestigt sein.

Gemäß einer weiteren vorteilhaften Ausgestaltung des zweiten Gegenstands der Erfindung weist jeder Befestigungsflansch eine zumindest teilweise umlaufend angeordnete Lochreihe mit axial verlaufenden Befestigungslöchern auf, über die das jeweilige Schneidelement umlaufend in verschiedenen Positionen an dem jeweiligen Befestigungsflansch befestigbar ist. Sind der jeweilige Befestigungsflansch und die daran angeordnete Lochreihe vollständig umlaufend angeordnet, kann es beispielsweise auch möglich sein, die Mähspindel je nach Wunsch zu konfigurieren, indem die Anzahl von Schneidelementen der jeweiligen Mähspindeluntereinheit auf einfache Weise an die jeweiligen Anforderungen angepasst werden kann. Dabei kann das jeweilige Befestigungsloch dazu genutzt werden, ein Verbindungsmittel, über das der jeweilige Befestigungsflansch mit dem jeweiligen das jeweilige Schneidelement haltenden Befestigungselement verbunden werden kann, durch das Befestigungsloch hindurchzuführen. Je mehr Befestigungslöcher die Lochreihe aufweist, desto feiner kann die Anpassung der Mähspindeluntereinheit an die jeweiligen Anforderungen erfolgen. Die Befestigungslöcher können beispielsweise gleichmäßig umfangsversetzt zueinander angeordnet sein. Der jeweilige Befestigungsflansch kann entweder kreisförmig oder elliptisch oder rautenförmig ausgebildet sein. Bei einem elliptisch oder rautenförmig ausgebildeten Befestigungsflansch kann an jedem der beiden äußeren Flanschabschnitte, die bezüglich einer Hauptachse des Befestigungsflansch diametral einander gegenüberliegend angeordnet sind, eine Lochreihe teilweise umlaufend angeordnet sein. Bei einem kreisförmig ausgebildeten Befestigungsflansch kann die Lochreihe teilweise oder vollständig umlaufend angeordnet sein.

Gemäß einer weiteren vorteilhaften Ausgestaltung des zweiten Gegenstands der Erfindung ist wenigstens ein Schneidelement als Vierkantstab ausgebildet oder es weist eine als rechtwinkliges Trapez ausgebildete Querschnittsfläche auf. Hierdurch ist das Schneidelement im Vergleich zu einem herkömmlichen Schneidmesser sehr robust und dauerhaft ausgebildet. Das jeweilige als Vierkantstab ausgebildete Schneidelement kann massiv ausgebildet sein und eine rechteckige, insbesondere quadratische, Querschnittsfläche aufweisen. Das jeweilige Schneidelement mit einer Querschnittsfläche in Form eines rechtwinkligen Trapezes kann eine Schneidkante an einem spitzen Winkel der Querschnittsfläche aufweisen.

Ein dritter Gegenstand der Erfindung ist ein Spindelmäheranbaugerät für einen Traktor, aufweisend wenigstens eine Spindelmähereinheit mit wenigstens einer Mähspindel mit Schneidelementen und wenigstens eine ansteuerbare Bewegungseinrichtung, die eingerichtet ist, die Mähspindel von einer unteren Mähstellung in eine obere Ausweichstellung zu bewegen, und umgekehrt. Hierdurch kann die Spindelmähereinheit bzw. die Mähspindel bei Bedarf mittels der Bewegungseinrichtung in die obere Ausweichstellung angehoben werden, beispielsweise um beim Überfahren von Steinen oder dergleichen einen Kontakt und einen damit einhergehenden Schaden an der Mähspindel zuverlässig vermeiden zu können. Die Bewegungseinrichtung kann hierzu wenigstens einen, insbesondere hydraulisch oder elektromechanisch, ansteuerbaren Aktor aufweisen. Dieser Gegenstand der Erfindung löst somit zusätzlich die Aufgabe, ein dauerhafteres Spindelmäheranbaugerät bereitzustellen.

Mit dem dritten Gegenstand der Erfindung erfolgt ein Mähvorgang mittels wenigstens einer Spindelmähereinheit, die wenigstens eine Mähspindel mit Schneidelementen aufweist. Im Gegensatz zu einer Verwendung eines eingangs beschriebenen Schlegelmäheranbaugeräts ist es bei einem Spindelmäheranbaugerät wegen einer anders ausgebildeten Schneidemechanik nicht erforderlich, die zu mähende Bepflanzung unmittelbar vor dem Schnitt mittels einer vom Untergrund weg gerichteten Luftströmung aufzurichten. Daher kann bei der Erfindung auf die Erzeugung einer solchen Luftströmung verzichtet werden, die eingangs beschriebenen Nachteil hätte. Folglich ermöglicht schon aufgrund dieses baulichen Unterschieds die Erfindung ein umweltschonendes Mähen eine bewachsenen Untergrunds.

Die Schneidelemente der Mähspindel können schraubenlinienförmig in axialer Richtung der Mähspindel verlaufen. Die Schneidelemente können beispielsweise als Schneidmesser ausgebildet sein. Das Spindelmähanbaugerät kann wenigstens eine, beispielsweise elektrische, Antriebseinheit zum Antreiben der Mähspindel aufweisen.

Der dritte Gegenstand der Erfindung bzw. das entsprechende Spindelmäheranbaugerät kann frontseitig oder heckseitig an einen Traktor oder an einem Ausleger eines Traktors angeordnet werden. Die Verwendung des Spindelmäheranbaugeräts soll aber nicht auf Traktoren eingeschränkt sein. Stattdessen kann das Spindelmäheranbaugerät auch an einem anderweitig ausgebildeten Nutzfahrzeug angeordnet und zum Mähen verwendet werden.

Gemäß einer vorteilhaften Ausgestaltung des dritten Gegenstands der Erfindung ist die Mähspindel über wenigstens einen in einer Ebene schwenkbar an einem Grundgestell des Spindelmäheranbaugeräts angeordneten Schwenkarm schwenkbar angeordnet, wobei die Bewegungseinrichtung einerseits an dem Grundgestell und andererseits an dem Schwenkarm angreift. Hierdurch führt die Mähspindel bei ihrer Bewegung von der unteren Mähstellung in die obere Ausweichstellung, und umgekehrt, eine Schwenkbewegung durch. Dabei kann der Schwenkarm beispielsweise um eine Schwenkachse schwenkbar angeordnet sein, die parallel zu der Längsmittelachse der Mähspindel ausgerichtet sein kann. Die Mähspindel kann beispielsweise um ihre Längsmittelachse drehbar an dem Schwenkarm angeordnet sein, wozu wenigstens ein Drehlager vorhanden sein kann. Die Mähspindel kann beispielsweise jeweils endseitig über einen eigenen Schwenkarm schwenkbar angeordnet sein, also zumindest teilweise zwischen den beiden Schwenkarmen angeordnet sein. Die beiden Schwenkarme können beispielsweise über wenigstens ein Bauteil starr miteinander verbunden sein. Das Bauteil kann beispielsweise gleichzeitig als Abdeckung dienen, mit der die Mähspindel auf ihrer der Absaugeinheit abgewandten Seite abgedeckt wird.

Gemäß einer weiteren vorteilhaften Ausgestaltung des dritten Gegenstands der Erfindung weist die Bewegungseinrichtung wenigstens einen ansteuerbaren Hydraulik- oder Pneumatikzylinder auf. Der Hydraulik- oder Pneumatikzylinder kann beispielsweise an ein Hydrauliksystem des Traktors angeschlossen werden, um den Hydraulik- oder Pneumatikzylinder betätigen zu können. Der Hydraulik- oder Pneumatikzylinder kann beispielsweise einerseits an dem Grundgestell des Spindelmäheranbaugeräts und andererseits an dem wenigstens einen Schwenkarm angreifen. Wenn zwei Schwenkarme vorhanden sind, kann die Bewegungseinrichtung auch für jeden Schwenkarm einen eigenen Hydraulik- oder Pneumatikzylinder aufweisen. Alternativ kann die Bewegungseinrichtung statt des Hydraulik- oder Pneumatikzylinders wenigstens eine elektromechanische Stelleinrichtung aufweisen.

Gemäß einer weiteren vorteilhaften Ausgestaltung des dritten Gegenstands der Erfindung weist das Spindelmäheranbaugerät wenigstens eine Absaugeinheit zum Absaugen von durch die Spindelmähereinheit erzeugtem Schnittgut auf. An die Absaugeinheit kann beispielsweise ein Absaugschlauch einer Absauganlage des Traktors angeschlossen werden, wobei die Absauganlage wenigstens ein Absauggebläse aufweisen kann. Die zum Absaugen von durch die Spindelmähereinheit erzeugtem Schnittgut zu erzeugende Luftströmung ist deutlich geringer als eine Luftströmung zum Aufrichten einer zu mähende Bepflanzung unmittelbar vor dem Schnitt. Zudem wird ein Schnittraum der Spindelmähereinheit durch das in die Absaugeinheit gesaugte Schnittgut gewissermaßen von der zum Absaugen von durch die Spindelmähereinheit erzeugtem Schnittgut gegebenen Luftströmung getrennt. Dadurch kann zuverlässig vermieden werden, dass Tiere vom zu mähenden Untergrund abgesaugt werden. Trotz des Vorhandenseins der Schnittgutabsaugung wird mit der Erfindung somit ein umweltschonendes Mähen eine bewachsenen Untergrunds ermöglicht. Im Vergleich zur Erzeugung einer Luftströmung zum Aufrichten einer zu mähende Bepflanzung unmittelbar vor dem Schnitt ist die Erzeugung einer Luftströmung zum Absaugen von mit der Spindelmähereinheit erzeugtem Schnittgut zudem deutlich weniger energieintensiv, da ein Absauggebläse deutlich geringer ausgelegt und unter geringerem Energieverbrauch betrieben werden kann. Darüber hinaus ist der Betrieb des Spindelmäheranbaugeräts bedingt durch den deutlich einfacheren und unter geringeren Kräften durchführbaren Schneidvorgang deutlich energiesparsamer als der Betrieb eines herkömmlichen Schlegelmähers.

Gemäß einer vorteilhaften Ausgestaltung des dritten Gegenstands der Erfindung weist die Absaugeinheit eine sich über zumindest einen größten Teil einer axialen Länge der Mähspindel erstreckende, auf ihrer der Mähspindel zugewandten Seite zumindest bereichsweise offen ausgebildete Absaugkammer auf, an der wenigstens ein Absauganschluss angeordnet ist, an dem ein Absaugschlauch anschließbar ist. Hierdurch kann das von der Spindelmähereinheit erzeugte Schnittgut sehr gleichmäßig bzw. vorzugsweise über die gesamte axiale Länge der Mähspindel abgesaugt werden, was die Schnittgutabsaugung verbessert, in dem das Liegenbleiben von Schnittgut auf dem Untergrund weitestgehend vermieden wird. Die Absaugkammer kann beispielsweise ein langgestreckt gebildetes Gehäuse aufweisen, dessen Längsachse parallel zur Längsmittelachse der Mähspindel angeordnet sein kann. Die der Mähspindel zugewandte Seite der Absaugkammer kann beispielsweise wenigstens eine langestreckt ausgebildete und parallel zur Längsmittelachse der Mähspindel verlaufende Absaugöffnung aufweisen. Alternativ kann die der Mähspindel zugewandte Seite der Absaugkammer beispielsweise zwei oder mehr in einer Reihe und beabstandet voneinander angeordnete Absaugöffnungen aufweisen. Der Ansauganschluss kann beispielsweise einen nach außen vorstehenden Anschlussstutzen aufweisen. Der Anschlussstutzen kann beispielsweise geneigt nach ober verlaufend angeordnet sein.

Gemäß einer weiteren vorteilhaften Ausgestaltung des dritten Gegenstands der Erfindung ist in der Absaugkammer wenigstens eine angetriebene Förderschnecke zumindest teilweise angeordnet, mit der ein in der Absaugkammer befindliches Schnittgut in Richtung des Absauganschlusses förderbar ist. Hierdurch kann das in der Absaugkammer befindliche Schnittgut sehr gleichmäßig aus der Absaugkammer entfernt werden, was insbesondere bei einer länger ausgebildeten Absaugkammer von Vorteil ist. Zudem muss durch das Vorhandensein der Förderschnecke die Absaugung des Schnittguts aus der Absaugkammer nicht über die gesamte Länge der Absaugkammer erfolgen, was den Energieverbrauch weiter erhöhen würde. Die Förderschnecke kann beispielsweise zwei gegenläufig ausgebildete, axial beabstandet voneinander angeordnete Schneckengewinde aufweisen, so dass das Schnittgut bei Drehung der Förderschnecke mit den Schneckengewinden aufeinander zu bewegt wird, vorzugsweise bis zu einem Bereich der Absaugkammer, an der der Absauganschluss angeordnet ist. Zum Antreiben der Förderschnecke kann außen an einer axialen Endwand der Absaugkammer wenigstens ein Antrieb, beispielsweise ein Hydraulikmotor, angeordnet sein.

Gemäß einer weiteren vorteilhaften Ausgestaltung des dritten Gegenstands der Erfindung weist die Mähspindel wenigstens zwei axial in einer Reihe angeordnete Mähspindeluntereinheiten auf, die jeweils umfangsversetzt zueinander angeordnete Schneidelemente aufweisen. Hierbei verlaufen die Schneidelemente also nicht wie herkömmlich über die gesamte axiale Länge der Mähspindel, sondern lediglich über einen Teil der axialen Lände der Mähspindel. Hierdurch muss bei einem Schaden an einem Schneidelement lediglich das im Vergleich zu herkömmlichen Schneidelementen relativ kurz ausgebildete Schneidelement ausgewechselt werden. Dies geht mit einem geringeren Materialverbrauch und somit mit geringeren Betriebs- und Wartungskosten einher. Die Mähspindel kann auch drei oder mehr solcher Mähspindeluntereinheiten aufweisen.

Gemäß einer weiteren vorteilhaften Ausgestaltung des dritten Gegenstands der Erfindung weist jede Mähspindeluntereinheit an jedem axialen Endabschnitt jeweils wenigstens einen zumindest teilweise umlaufend ausgebildeten und radial nach außen ragenden Befestigungsflansch auf, an denen die Schneidelemente der jeweiligen Mähspindeluntereinheit befestigt sind, wobei axial unmittelbar benachbart zueinander angeordnete Mähspindeluntereinheiten an ihren einander zugewandt angeordneten axialen Endabschnitten einen gemeinsamen Befestigungsflansch aufweisen und Schneidelemente der axial unmittelbar benachbart zueinander angeordnete Mähspindeluntereinheiten umfangsversetzt zueinander angeordnet sind. Das jeweilig an den jeweiligen Befestigungsflanschen befestigte Schneidelement ist radial beabstandet zu einer Achse der Mähspindel angeordnet. Eine Anzahl von Befestigungsflanschen ist immer um die Zahl Eins größer als die Anzahl von Mähspindeluntereinheiten. Das jeweilige Schneidelement kann beispielsweise mittels jeweils eines Befestigungselements an dem jeweiligen Befestigungsflansch befestigt werden. Das jeweilige Befestigungselement kann beispielsweise über wenigstens ein mechanisches Verbindungsmittel, beispielsweise eine Schraubverbindung oder eine Nietverbindung, an dem jeweiligen Befestigungsflansch befestigt sein.

Gemäß einer weiteren vorteilhaften Ausgestaltung des dritten Gegenstands der Erfindung weist jeder Befestigungsflansch eine zumindest teilweise umlaufend angeordnete Lochreihe mit axial verlaufenden Befestigungslöchern auf, über die das jeweilige Schneidelement umlaufend in verschiedenen Positionen an dem jeweiligen Befestigungsflansch befestigbar ist. Sind der jeweilige Befestigungsflansch und die daran angeordnete Lochreihe vollständig umlaufend angeordnet, kann es beispielsweise auch möglich sein, die Mähspindel je nach Wunsch zu konfigurieren, indem die Anzahl von Schneidelementen der jeweiligen Mähspindeluntereinheit auf einfache Weise an die jeweiligen Anforderungen angepasst werden kann. Dabei kann das jeweilige Befestigungsloch dazu genutzt werden, ein Verbindungsmittel, über das der jeweilige Befestigungsflansch mit dem jeweiligen das jeweilige Schneidelement haltenden Befestigungselement verbunden werden kann, durch das Befestigungsloch hindurchzuführen. Je mehr Befestigungslöcher die Lochreihe aufweist, desto feiner kann die Anpassung der Mähspindeluntereinheit an die jeweiligen Anforderungen erfolgen. Die Befestigungslöcher können beispielsweise gleichmäßig umfangsversetzt zueinander angeordnet sein. Der jeweilige Befestigungsflansch kann entweder kreisförmig oder elliptisch oder rautenförmig ausgebildet sein. Bei einem elliptisch oder rautenförmig ausgebildeten Befestigungsflansch kann an jedem der beiden äußeren Flanschabschnitte, die bezüglich einer Hauptachse des Befestigungsflansch diametral einander gegenüberliegend angeordnet sind, eine Lochreihe teilweise umlaufend angeordnet sein. Bei einem kreisförmig ausgebildeten Befestigungsflansch kann die Lochreihe teilweise oder vollständig umlaufend angeordnet sein.

Gemäß einer weiteren vorteilhaften Ausgestaltung des dritten Gegenstands der Erfindung ist wenigstens ein Schneidelement als Vierkantstab ausgebildet oder es weist eine als rechtwinkliges Trapez ausgebildete Querschnittsfläche auf. Hierdurch ist das Schneidelement im Vergleich zu einem herkömmlichen Schneidmesser sehr robust und dauerhaft ausgebildet. Das jeweilige als Vierkantstab ausgebildete Schneidelement kann massiv ausgebildet sein und eine rechteckige, insbesondere quadratische, Querschnittsfläche aufweisen. Das jeweilige Schneidelement mit einer Querschnittsfläche in Form eines rechtwinkligen Trapezes kann eine Schneidkante an einem spitzen Winkel der Querschnittsfläche aufweisen.

Im Folgenden wird die Erfindung unter Bezugnahme auf die beigefügten Figuren anhand einer bevorzugten Ausführungsform beispielhaft erläutert, wobei die nachfolgend erläuterten Merkmale sowohl jeweils für sich genommen als auch in unterschiedlicher Kombination miteinander einen vorteilhaften und/oder weiterbildenden Aspekt der Erfindung darstellen können.

### Kurze Beschreibung der Figuren

Es zeigt:
- Fig. 1: eine schematische und perspektivische Rückansicht eines Ausführungsbeispiels für ein erfindungsgemäßes Spindelmäheranbaugerät;
- Fig. 2: eine schematische Seitenansicht des in Fig. 1 gezeigten Spindelmäheranbaugeräts;
- Fig. 3: eine schematische Rückansicht des in Fig. 1 gezeigten Spindelmäheranbaugeräts;
- Fig. 4: eine weitere schematische Seitenansicht des in Fig. 1 gezeigten Spindelmäheranbaugeräts;
- Fig. 5: eine schematische Vorderansicht des in Fig. 1 gezeigten Spindelmäheranbaugeräts;
- Fig. 6: eine schematische und perspektivische Rückansicht der in den Fign. 1 bis 6 gezeigten Spindelmähereinheit;
- Fig. 7: eine schematische Schnittdarstellung des in Fig. 4 gezeigten Spindelmäheranbaugeräts mit in unterer Mähposition befindlicher Mähspindel;
- Fig. 8: eine schematische Schnittdarstellung des in Fig. 4 gezeigten Spindelmäheranbaugeräts mit in oberer Ausweichposition befindlicher Mähspindel;
- Fig. 9: eine schematische und perspektivische Darstellung der in den Fign. 1, 2 und 4 bis 8 gezeigten Mähspindel;
- Fig. 10: eine schematische Vorderansicht der in den Fign. 1 bis 4 und 6 bis 8 gezeigten Absaugeinheit; und
- Fig. 11: eine schematische und perspektivische Darstellung einer Mähspindel eines weiteren Ausführungsbeispiels für ein erfindungsgemäßes Spindelmäheranbaugeräts.

### Ausführliche Beschreibung der Figuren

In den Figuren sind gleiche bzw. funktionsgleiche Bauteile mit denselben Bezugszeichen versehen. Eine wiederholte Beschreibung solcher Bauteile kann im Einzelnen zur Vermeidung von unnötigen Wiederholungen weggelassen sein.

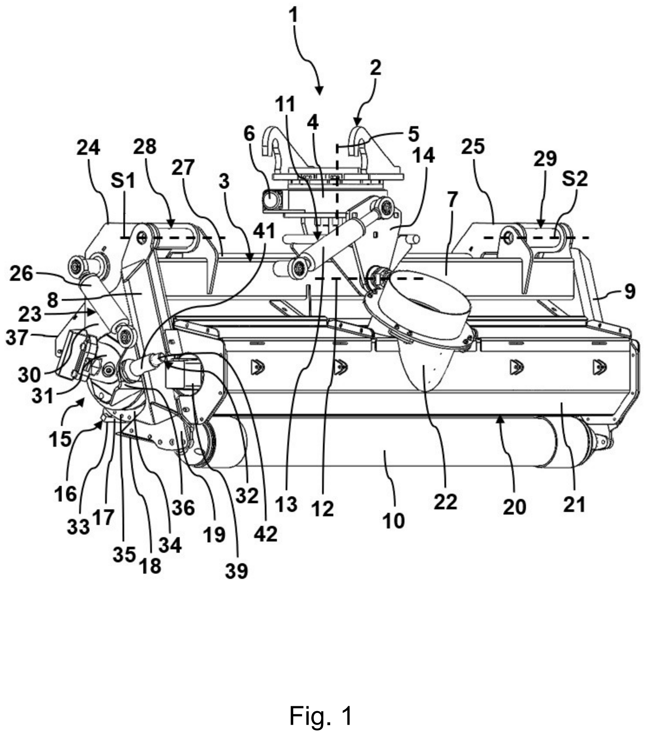

Fig. 1 zeigt eine schematische und perspektivische Rückansicht eines Ausführungsbeispiels für ein erfindungsgemäßes Spindelmäheranbaugerät 1 für einen nicht gezeigten Traktor.

Das Spindelmäheranbaugerät 1 weist eine Verbindungseinrichtung 2 auf, über die das Spindelmäheranbaugerät 1 an einen nicht gezeigten Ausleger des Traktors koppelbar ist. Das Spindelmäheranbaugerät 1 weist darüber hinaus ein Grundgestell 3 auf, das über ein Drehlager 4 um eine Drehachse 5 drehbeweglich mit der Verbindungseinrichtung 2 verbunden ist. Um das Grundgestell 3 entsprechend relativ zu der Verbindungseinrichtung 2 drehen zu können, weist das Spindelmäheranbaugerät 1 eine Antriebseinheit 6 auf, die beispielsweise ein nicht gezeigtes Schneckengetriebe aufweisen kann.

Das Grundgestell 3 weist einen quer zu der Drehachse 5 verlaufenden Stegabschnitt 7 auf, an dem axial endseitig jeweils ein quer zu dem Stegabschnitt 7 verlaufender Schenkelabschnitt 8 bzw. 9 angeordnet ist. An unteren Endabschnitten der Schenkelabschnitte 8 und 9 ist eine Walze 10 um ihre Längsmittelachse drehbar gelagert.

Des Weiteren weist das Spindelmäheranbaugerät 1 einen Schwenkmechanismus 11 auf, mittels dem das Grundgestell 3 um eine quer zu der Drehachse 5 ausgerichtete Schwenkachse 12 schwenkbar mit dem Drehlager 4 bzw. mit der Verbindungseinrichtung 2 verbunden ist. Hierzu ist der Stegabschnitt 7 des Grundgestells 3 über ein nicht gezeigtes Schwenklager schwenkbar mit dem Drehlager 4 bzw. mit der Verbindungseinrichtung 2 verbunden. Der Schwenkmechanismus 11 weist einen ansteuerbaren Antrieb 13 in Form eines Hydraulikzylinders auf, der einerseits an dem Stegabschnitt 7 des Grundgestells 3 und andererseits an einem unbeweglich mit dem Stehabschnitt 7 verbundenen Hebelelement 14 angreift.

Zudem weist das Spindelmäheranbaugerät 1 eine Spindelmähereinheit 15 mit einer Mähspindel 16 mit mehreren Schneidelementen 17 auf. Die Schneidelemente 17 sind jeweils als Vierkantstab ausgebildet. Des Weiteren weist die Spindelmäheinheit 15 ein feststehend angeordnetes, mit den Schneidelementen 17 zusammenwirkendes Schneidmesser 18 auf, dass an axialen Enden über jeweils ein Verbindungselement 19 mit dem jeweiligen Schenkelabschnitt 8 bzw. 9 verbunden ist.

Das Spindelmäheranbaugerät 1 weist darüber hinaus eine Absaugeinheit 20 zum Absaugen von durch die Spindelmähereinheit 15 erzeugtem Schnittgut auf. Die Absaugeinheit 20 weist eine sich etwa über eine axiale Länge der Mähspindel 16 erstreckende, auf ihrer der Mähspindel 16 zugewandten, in Fig. 1 nicht gezeigten Seite zumindest bereichsweise offen ausgebildete Absaugkammer 21 auf, an der mittig ein Absauganschluss 22 angeordnet ist, an dem ein nicht gezeigten Absaugschlauch anschließbar ist. Die Absaugkammer 21 ist an ihren axialen Enden mit jeweils einem der Schenkelabschnitts 8 bzw. 9 des Grundgestells 3 verbunden.

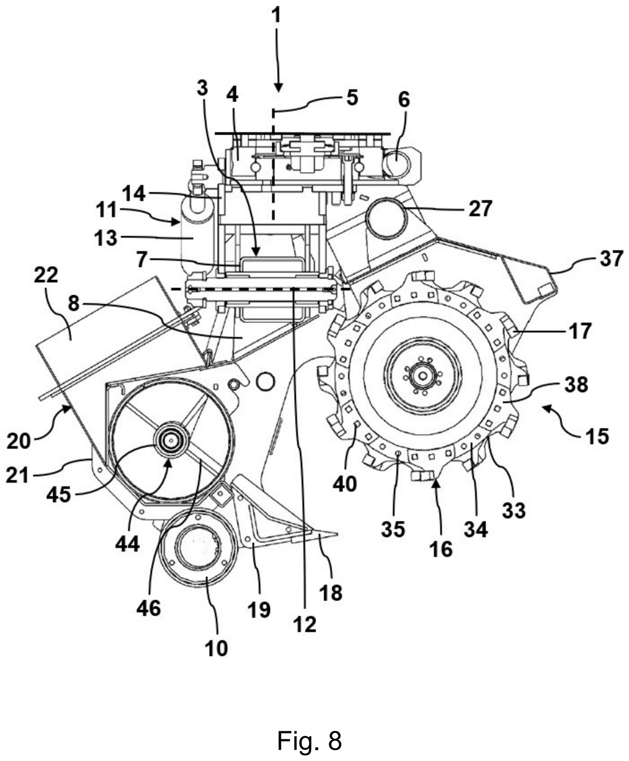

Das Spindelmäheranbaugerät 1 weist zwei ansteuerbare Bewegungseinrichtungen 23 auf, von denen in Fig. 1 lediglich eine Bewegungseinrichtung 23 gezeigt ist. Die jeweilige Bewegungseinrichtung 23 ist eingerichtet, die Mähspindel 16 von der in Fig. 1 gezeigten unteren Mähstellung in eine in Fig. 8 gezeigte obere Ausweichstellung zu bewegen, und umgekehrt. Hierzu ist die Mähspindel 16 über zwei jeweils in einer Ebene schwenkbar an dem Grundgestell 3 angeordnete Schwenkarme 24 und 25 schwenkbar angeordnet. Die jeweilige Bewegungseinrichtung 23 greift einerseits an dem Grundgestell bzw. dem jeweiligen Schenkelabschnitt 8 bzw. 9 davon und andererseits an dem jeweiligen Schwenkarm 24 bzw. 25 an. Dabei weist die jeweilige Bewegungseinrichtung 23 einen ansteuerbaren Hydraulik- oder Pneumatikzylinder 26 auf, der einerseits an dem Grundgestell bzw. dem jeweiligen Schenkelabschnitt 8 bzw. 9 davon und andererseits an dem jeweiligen Schwenkarm 24 bzw. 25 angreift.

Die beiden Schwenkarme 24 und 25 sind über eine Verbindungsstange 27 starr miteinander verbunden, die sich seitlich beabstandet zu der Mähspindel 16 erstreckt und parallel zu der Längsmittelachse der Mähspindel 16 verläuft. Jeder Schwenkarm 24 bzw. 25 ist über ein eigenes Schwenklager 28 bzw. 29 um eine quer zu der Drehachse 5 ausgerichtete Schwenkachse S1 bzw. S2 schwenkbar mit dem Grundgestell 3 verbunden.

An der in Fig. 1 gezeigten linken Seitenwand 30 der Spindelmähereinheit 15 ist ein Spindelantrieb 31 zum Antreiben der Mähspindel 16 angeordnet.

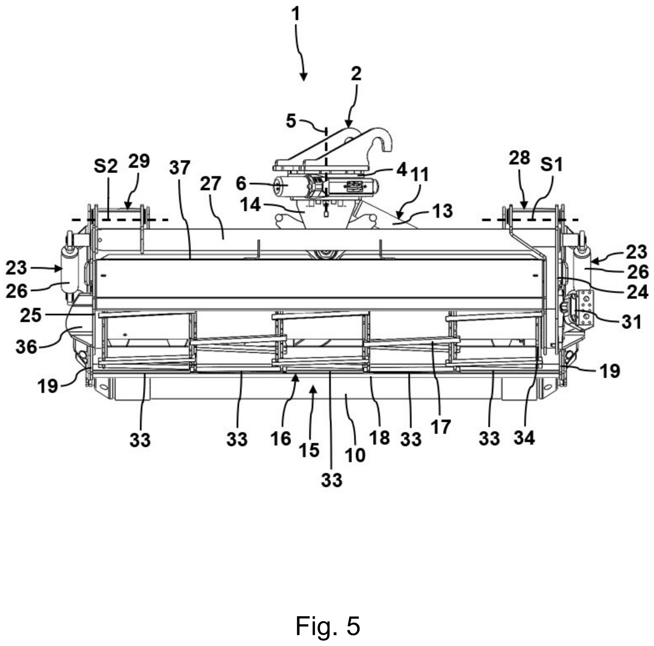

Die Mähspindel 16 weist fünf axial in einer Reihe angeordnete Mähspindeluntereinheiten 33 auf, die jeweils umfangsversetzt zueinander angeordnete Schneidelemente 17 aufweisen. In Fig. 1 ist lediglich ein axiales Ende von einer der Mähspindeluntereinheiten 33 gezeigt. Der Aufbau der Mähspindel 16 ergibt sich vollständig aus den Fign. 5, 6 und 9.

Jede Mähspindeluntereinheit 33 weist an jedem axialen Endabschnitt jeweils einen umlaufend ausgebildeten und radial nach außen ragenden Befestigungsflansch 34 auf, von denen in Fig. 1 lediglich ein Befestigungsflansch 34 gezeigt ist. An den Befestigungsflanschen 34 der jeweiligen Mähspindeluntereinheit 33 sind die Schneidelemente 17 der jeweiligen Mähspindeluntereinheit 33 befestigt.

Axial unmittelbar benachbart zueinander angeordnete Mähspindeluntereinheiten 33 weisen an ihren einander zugewandt angeordneten axialen Endabschnitten einen gemeinsamen Befestigungsflansch 34 auf, wie es in den Fign. 5, 6 und 9 gezeigt ist. Schneidelemente 17 der axial unmittelbar benachbart zueinander angeordnete Mähspindeluntereinheiten 33 sind umfangsversetzt zueinander angeordnet, wie es in den Fign. 5, 6 und 9 gezeigt ist.

Jeder Befestigungsflansch 34 weist eine umlaufend angeordnete Lochreihe mit axial verlaufenden Befestigungslöchern 35 auf, über die das jeweilige Schneidelement 17 umlaufend in verschiedenen Positionen an dem jeweiligen Befestigungsflansch 34 befestigbar ist.

Das Spindelmäheranbaugerät 1 weist zudem zwei an dem jeweiligen Schenkelabschnitt 8 bzw. 9 des Grundgestells 3 angeordnete Pufferelemente 32 auf, von denen in Fig. 1 lediglich ein Pufferelement 32 gezeigt ist. Das Pufferelement 32 wirkt mit einem an der Seitenwand 30 angeordneten Anschlagelement 36 zusammen. Das jeweilige Pufferelement 32 ist einstellbar, um einen Abstand zwischen den Schneidelementen 17 und dem feststehenden Schneidmesser 18 einstellen zu können. Hierzu weist das jeweilige Pufferelement 32 eine Gewindehülse 41 auf, in die ein Anschlagbauteil 42 eingeschraubt und somit axial verstellbar an der Gewindehülse 41 angeordnet ist.

Die Spindelmähereinheit 15 weist ferner eine Abdeckung 37 auf, die die Mähspindel 16 teilweise von oben abdeckt und daher unzugänglicher macht.

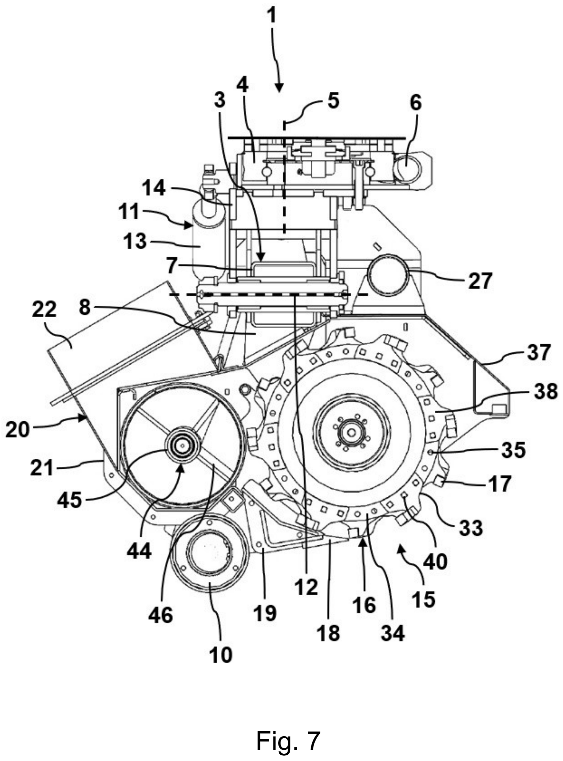

An einer dem Betrachter von Fig. 1 zugewandt angeordneten axialen Endseite der Absaugkammer 21 ist ein Antrieb 39 in Form eines Hydraulikmotors angeordnet, mit dem eine in der Absaugkammer 21 angeordnete, in den Fign. 7, 8 und 10 gezeigte Förderschnecke antreibbar ist.

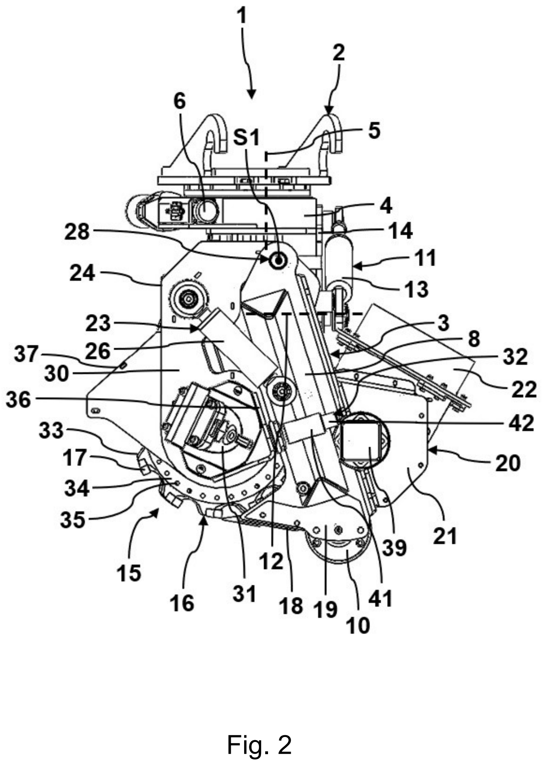

Fig. 2 zeigt eine schematische Seitenansicht des in Fig. 1 gezeigten Spindelmäheranbaugeräts 1. Es ist die in Fig. 1 links gezeigte Seite des Spindelmäheranbaugeräts 1 gezeigt.

Es ist unter anderem ein größerer Abschnitt der Mähspindel 16 gezeigt, so dass mehrere Schneidelemente 17 zusehen sind und ein größerer Abschnitt des Befestigungsflanschs 34 zu sehen ist.

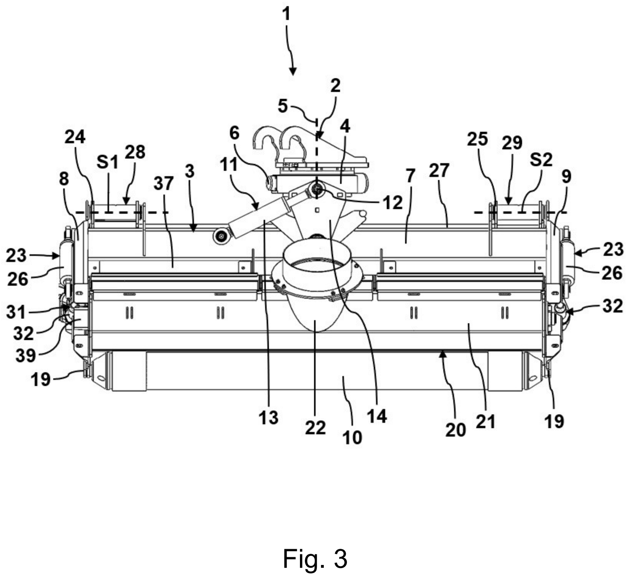

Fig. 3 zeigt eine schematische Rückansicht des in Fig. 1 gezeigten Spindelmäheranbaugeräts 1. Es sind unter anderem beide Bewegungseinrichtungen 23 mit ihren Hydraulik- oder Pneumatikzylindern 26 gezeigt, wobei die Bewegungseinrichtungen 23 im Wesentlichen gleich aufgebaut sind.

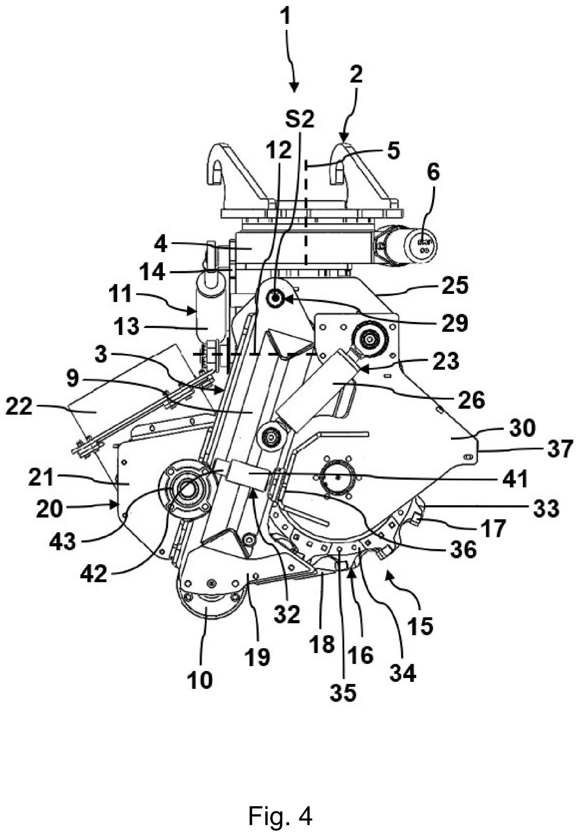

Fig. 4 zeigt eine weitere schematische Seitenansicht des in Fig. 1 gezeigten Spindelmäheranbaugeräts 1. Es ist die in Fig. 1 rechts gezeigte Seite des Spindelmäheranbaugeräts 1 gezeigt.

Unter anderem sind das zweite Pufferelement 32 und das damit zusammenwirkende zweite Anschlagelement 36 gezeigt. Zudem ist an der dem Betrachten von Fig. 4 zugewandt angeordneten axialen Endseite der Absaugkammer 1 ein Drehlager 43 angeordnet, über das die in den Fign. 7, 8 und 10 gezeigte Förderschnecke drehbar in der Absaugkammer 21 angeordnet ist.

Fig. 5 zeigt eine schematische Vorderansicht des in Fig. 1 gezeigten Spindelmäheranbaugeräts 1. Es sind unter anderem die fünf axial in einer Reihe angeordneten Mähspindeluntereinheiten 33 gezeigt, die jeweils umfangsversetzt zueinander angeordnete Schneidelemente 17 aufweisen.

Jede Mähspindeluntereinheit 33 weist an jedem axialen Endabschnitt jeweils einen umlaufend ausgebildeten und radial nach außen ragenden Befestigungsflansch 34, also insgesamt zwei Befestigungsflansche 34 auf. An den Befestigungsflanschen 34 der jeweiligen Mähspindeluntereinheit 33 sind die Schneidelemente 17 der jeweiligen Mähspindeluntereinheit 33 befestigt.

Axial unmittelbar benachbart zueinander angeordnete Mähspindeluntereinheiten 33 weisen an ihren einander zugewandt angeordneten axialen Endabschnitten einen gemeinsamen Befestigungsflansch 34 auf. Schneidelemente 17 der axial unmittelbar benachbart zueinander angeordnete Mähspindeluntereinheiten 33 sind umfangsversetzt zueinander angeordnet.

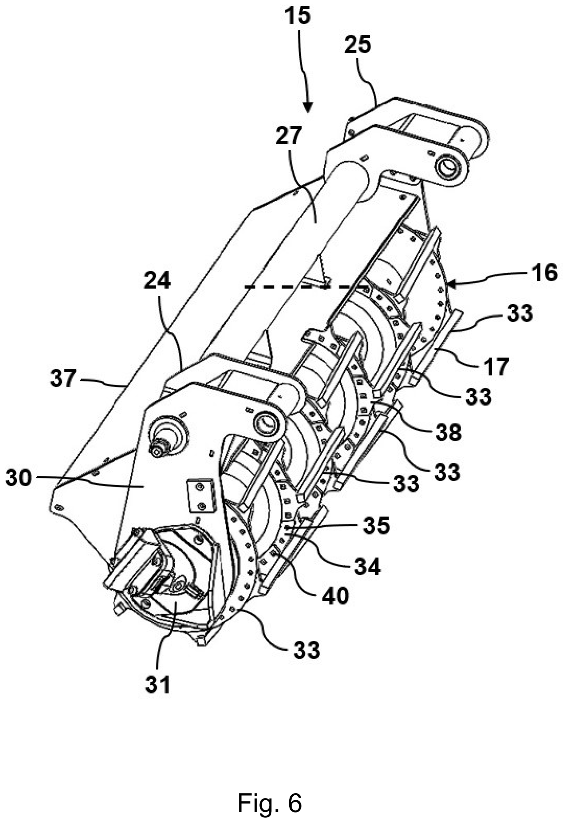

Fig. 6 zeigt eine schematische und perspektivische Rückansicht der in den Fign. 1 bis 6 gezeigten Spindelmähereinheit 15.

Es sind unter anderem Befestigungselemente 38 gezeigt, über die die Schneidelemente 17 an den Befestigungsflanschen 34 befestigt sind. Die Befestigungselemente 38 sind gleich aufgebaut. Jedes Befestigungselement 38 weist drei in einer Reihe angeordnete Öffnungen 40 auf, die zum Befestigen an dem jeweiligen Befestigungsflansch 34 in Deckung zu drei Befestigungslöchern 35 des jeweiligen Befestigungsflanschs 34 gebracht sind. Durch jedes Paar aus Öffnung 40 und in Deckung dazu befindlichem Befestigungsloch 35 ist ein nicht gezeigtes Befestigungsmittel, beispielsweise eine Schraubverbindung oder eine Nietverbindung, hindurchgeführt. Das jeweilige Schneidelement 17 ist an radial nach außen ragenden Endabschnitten der jeweiligen Befestigungselemente 38 befestigt. Das jeweilige Schneidelement 17 ist mit den jeweiligen beiden Befestigungselementen 38 verschweißt.

Fig. 7 zeigt eine schematische Schnittdarstellung des in Fig. 4 gezeigten Spindelmäheranbaugeräts 1 mit in unterer Mähposition befindlicher Mähspindel 16.

Es ist unter anderem gezeigt, wie die Schneidelemente 17 mit dem feststehenden Schneidmesser 18 zusammenwirken. In der Absaugkammer 21 ist die Förderschnecke 44 gezeigt, die eine Welle 45 und zwei daran angeordnete, gegenläufig ausgebildete Schneckengewinde 46 aufweist, wobei in Fig. 7 nur eines der Schneckengewinde 46 gezeigt ist.

Fig. 8 zeigt eine schematische Schnittdarstellung des in Fig. 4 gezeigten Spindelmäheranbaugeräts 1 mit in oberer Ausweichposition befindlicher Mähspindel 16. In der oberen Ausweichposition ist die Mähspindel 16 beabstandet zu dem feststehenden Schneidmesser 18 und höher als in der unteren Mähposition angeordnet.

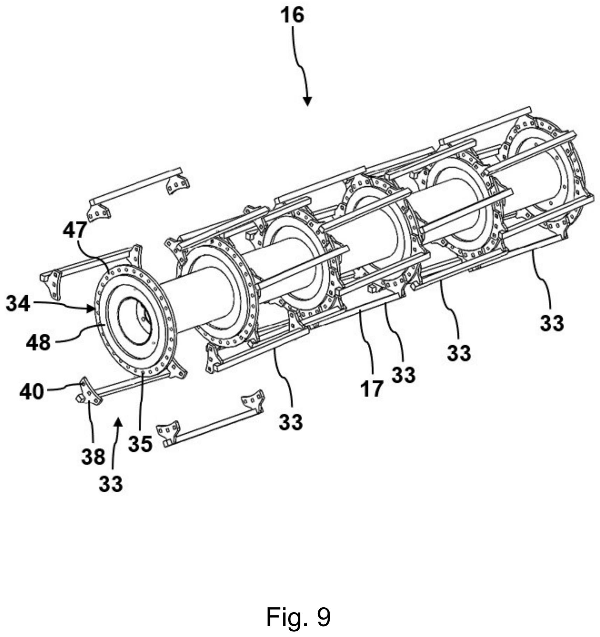

Fig. 9 zeigt eine schematische und perspektivische Darstellung der in den Fign. 1, 2 und 4 bis 8 gezeigten Mähspindel 16. Die in Fig. 9 links gezeigte Mähspindeluntereinheit 33 ist als Explosionsdarstellung gezeigt, während die vier weiteren Mähspindeluntereinheiten 33 in vollständig montiertem Zustand gezeigt sind.

Es ist unter anderem gezeigt, dass jeder Befestigungsflansch 34 eine die Befestigungslöcher 35 aufweisende Befestigungsscheibe 47 und wenigstens einen koaxial an der Befestigungsscheibe 47 angeordneten Stützring 48 aufweist, wobei ein Außendurchmesser der Befestigungsscheibe 47 größer als ein Außendurchmesser des Stützrings 48 ist. Der jeweilige Stützring 48 dient zum radialen Abstützen der an dem jeweiligen Befestigungsflansch 34 befestigten Befestigungselemente 38, was die Mähspindel 16 deutlich robuster macht. Die axial außen angeordneten Befestigungsflansche 34 weisen jeweils lediglich einen einzigen Stützring 48 auf, die auf einander abgewandten Seiten der beiden äußeren Befestigungsflansche 34 angeordnet sind. Jeder der zwischen den äußeren Befestigungsflanschen 34 angeordneten mittigen Befestigungsflansche 34 weist auf beiden seiner einander gegenüberliegenden Seiten jeweils einen Stützring 48 auf, also insgesamt zwei Stützringe 48.

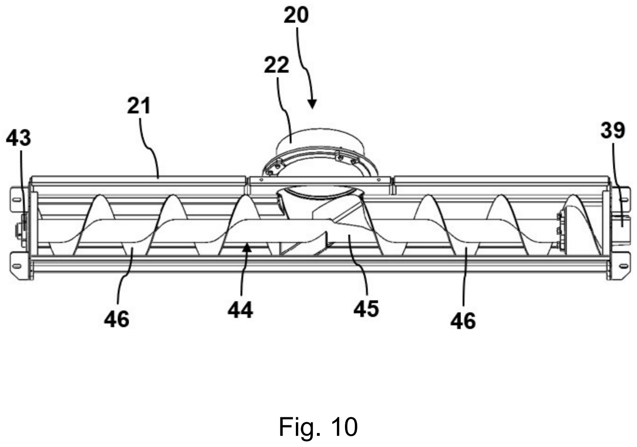

Fig. 10 zeigt eine schematische Vorderansicht der in den Fign. 1 bis 4 und 6 bis 8 gezeigten Absaugeinheit 20. Es sind insbesondere die beiden axial beabstandet voneinander angeordneten und gegenläufig ausgebildeten Schneckengewinde 46 gezeigt, die an der gemeinsamen Welle 45 angeordnet sind. Durch die Gegenläufigkeit der Schneckengewinde 46 fördert das in Fig. 10 links gezeigte Schneckengewinde 46 das Schnittgut von links zur Mitte der Absaugkammer 21, während gleichzeitig das in Fig. 10 rechts gezeigte Schneckengewinde 46 das Schnittgut von rechts zur Mitte der Absaugkammer 21 fördert. In der Mitte der Absaugkammer 21 wird dann das Schnittgut über den Absauganschluss 22 aus der Absaugkammer 21 abgesaugt.

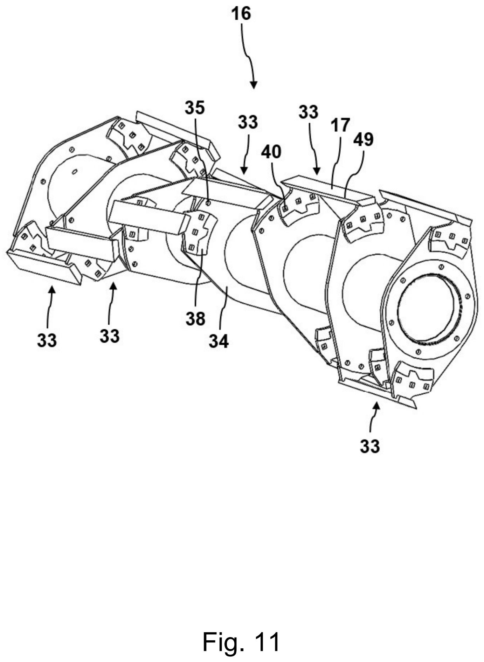

Fig. 11 zeigt eine schematische und perspektivische Darstellung einer Mähspindel 16 eines weiteren Ausführungsbeispiels für ein nicht gezeigtes erfindungsgemäßes Spindelmäheranbaugeräts. Das Spindelmäheranbaugerät kann bis auf die Mähspindel 16 beispielsweise entsprechend dem in den Fign. 1 bis 10 gezeigten Ausführungsbeispiel ausgebildet sein.

Die Mähspindel 16 unterscheidet sich dadurch von der Mähspindel des in den Fign. 1 bis 10 gezeigten Ausführungsbeispiels, dass der jeweilige Befestigungsflansch 34 nicht kreisförmig, sondern elliptisch bzw. rautenförmig ausgebildet ist, so dass die Lochreihe aus Befestigungslöchern 35 des jeweiligen Befestigungsflanschs 34 zweimal unterbrochen ist. Hierdurch ist die Lochreihe teilweise umlaufend an dem jeweiligen Befestigungsflansch 34 angeordnet. Die Befestigungslöcher 35 der jeweiligen Lochreihe sind an bezüglich einer Längsmittelachse der Mähspindel 16 diametral einander gegenüberliegenden Flanschabschnitten des jeweiligen Befestigungsflanschs 34 angeordnet.

Die in Axialrichtung der Mähspindel 16 endseitig angeordneten Befestigungsflansche 34 sind anders als die dazwischen angeordneten Befestigungsflansche 34 ausgebildet, da ihre Lochreihen jeweils lediglich sechs Befestigungslöcher 35 aufweisen, währen die Lochreihen der übrigen Befestigungsflansche 34 jeweils 10 Befestigungslöcher 35 aufweisen.

Ein weiterer Unterschied der Mähspindel 16 zu dem in den Fign. 1 bis 10 gezeigten Ausführungsbeispiel ist, dass jedes ein Schneidelement 17 eine als rechtwinkliges Trapez ausgebildete Querschnittsfläche aufweist, wobei eine Schneidkante 49 des jeweiligen Schneidelements 17 an einem spitzen Winkel der Querschnittsfläche angeordnet ist.

Zur Vermeidung von Wiederholungen wird im Übrigen auf die obige Beschreibung zu den Fign. 1 bis 10 verwiesen.

### Bezugszeichenliste

- 1: Spindelmäheranbaugerät
- 2: Verbindungseinrichtung
- 3: Grundgestell
- 4: Drehlager
- 5: Drehachse
- 6: Antriebseinheit
- 7: Stegabschnitt von 3
- 8: Schenkelabschnitt von 3
- 9: Schenkelabschnitt von 3
- 10: Walze
- 11: Schwenkmechanismus
- 12: Schwenkachse
- 13: Antrieb von 11
- 14: Hebelelement von 11
- 15: Spindelmähereinheit
- 16: Mähspindel
- 17: Schneidelement
- 18: Schneidmesser
- 19: Verbindungselement
- 20: Absaugeinheit
- 21: Absaugkammer
- 22: Absauganschluss
- 23: Bewegungseinrichtung
- 24: Schwenkarm
- 25: Schwenkarm
- 26: Hydraulik- oder Pneumatikzylinder
- 27: Verbindungsstange
- 28: Schwenklager
- 29: Schwenklager
- 30: Seitenwand von 15
- 31: Spindelantrieb
- 32: Pufferelement
- 33: Mähspindeluntereinheit
- 34: Befestigungsflansch
- 35: Befestigungsloch
- 36: Anschlagelement
- 37: Abdeckung
- 38: Befestigungselement
- 39: Antrieb
- 40: Öffnung an 38
- 41: Gewindehülse von 32
- 42: Anschlagbauteil von 32
- 43: Drehlager
- 44: Förderschnecke
- 45: Welle von 44
- 46: Schneckengewinde
- 47: Befestigungsscheibe von 34
- 48: Stützring von 34
- 49: Schneidkante
- S1: Schwenkachse
- S2: Schwenkachse

## Patentansprüche

1. Spindelmäheranbaugerät (1) für einen Traktor, aufweisend wenigstens eine Spindelmähereinheit (15) mit wenigstens einer Mähspindel (16) mit Schneidelementen (17), **dadurch gekennzeichnet, dass** die Mähspindel (16) wenigstens zwei axial in einer Reihe angeordnete Mähspindeluntereinheiten (33) aufweist, die jeweils umfangsversetzt zueinander angeordnete Schneidelemente (17) aufweisen.

2. Spindelmäheranbaugerät (1) nach Anspruch 1, **dadurch gekennzeichnet, dass** jede Mähspindeluntereinheit (33) an jedem axialen Endabschnitt jeweils wenigstens einen zumindest teilweise umlaufend ausgebildeten und radial nach außen ragenden Befestigungsflansch (34) aufweist, an denen die Schneidelemente (17) der jeweiligen Mähspindeluntereinheit (33) befestigt sind, wobei axial unmittelbar benachbart zueinander angeordnete Mähspindeluntereinheiten (33) an ihren einander zugewandt angeordneten axialen Endabschnitten einen gemeinsamen Befestigungsflansch (34) aufweisen und Schneidelemente (17) der axial unmittelbar benachbart zueinander angeordnete Mähspindeluntereinheiten (33) umfangsversetzt zueinander angeordnet sind.

3. Spindelmäheranbaugerät (1) nach Anspruch 2, **dadurch gekennzeichnet, dass** jeder Befestigungsflansch (34) eine zumindest teilweise umlaufend angeordnete Lochreihe mit axial verlaufenden Befestigungslöchern (35) aufweist, über die das jeweilige Schneidelement (17) umlaufend in verschiedenen Positionen an dem jeweiligen Befestigungsflansch (34) befestigbar ist.

4. Spindelmäheranbaugerät (1) nach einem der Ansprüche 1 bis 3, **dadurch gekennzeichnet, dass** wenigstens ein Schneidelement (17) als Vierkantstab ausgebildet ist oder eine als rechtwinkliges Trapez ausgebildete Querschnittsfläche aufweist.

5. Spindelmäheranbaugerät (1) nach einem der Ansprüche 1 bis 4, **gekennzeichnet durch** wenigstens eine Absaugeinheit (20) zum Absaugen von durch die Spindelmähereinheit (15) erzeugtem Schnittgut.

6. Spindelmäheranbaugerät (1) nach Anspruch 5, **dadurch gekennzeichnet, dass** die Absaugeinheit (20) eine sich über zumindest einen größten Teil einer axialen Länge der Mähspindel (16) erstreckende, auf ihrer der Mähspindel (16) zugewandten Seite zumindest bereichsweise offen ausgebildete Absaugkammer (21) aufweist, an der wenigstens ein Absauganschluss (22) angeordnet ist, an dem ein Absaugschlauch anschließbar ist.

7. Spindelmäheranbaugerät (1) nach einem der Ansprüche 1 bis 6, **gekennzeichnet durch** wenigstens eine ansteuerbare Bewegungseinrichtung (23), die eingerichtet ist, die Mähspindel (16) von einer unteren Mähstellung in eine obere Ausweichstellung zu bewegen, und umgekehrt.

8. Spindelmäheranbaugerät (1) nach Anspruch 7, **dadurch gekennzeichnet, dass** die Mähspindel (16) über wenigstens einen in einer Ebene schwenkbar an einem Grundgestell (3) des Spindelmäheranbaugeräts (1) angeordneten Schwenkarm (24, 25) schwenkbar angeordnet ist, wobei die Bewegungseinrichtung (23) einerseits an dem Grundgestell (3) und andererseits an dem Schwenkarm (24, 25) angreift.

9. Spindelmäheranbaugerät (1) nach Anspruch 7 oder 8, **dadurch gekennzeichnet, dass** die Bewegungseinrichtung (23) wenigstens einen ansteuerbaren Hydraulik- oder Pneumatikzylinder (26) aufweist.
